# EUROPÄISCHE PATENTSCHRIFT

(11) **EP 2 391 668 B1**
(45) Veröffentlichungstag und Bekanntmachung des Hinweises auf die Patenterteilung: **17.05.2017**
(21) Anmeldenummer: 10701553.9
(22) Anmeldetag: 01.02.2010
(51) Int. Cl.: C08G 69/16, C08F 2/14, C08F 2/01, B01J 19/24, B01J 4/00, C08G 69/14

(54) **VERFAHREN ZUR HERSTELLUNG VON POLYMEREN SOWIE REAKTOR ZUR DURCHFÜHRUNG DES VERFAHRENS**
METHOD FOR PRODUCING POLYMERS AND REACTOR FOR CARRYING OUT SAID METHOD
PROCÉDÉ DE PRODUCTION DE POLYMÈRES ET RÉACTEUR APPROPRIÉ POUR METTRE LEDIT PROCÉDÉ EN OEUVRE

(30) Priorität: 02.02.2009 EP 09151847
(43) Veröffentlichungstag der Anmeldung: 07.12.2011
(73) Patentinhaber: BASF SE, 67056 Ludwigshafen am Rhein (DE)
(72) Erfinder: ABBOUD, Mohammed, 68161 Mannheim (DE); DESBOIS, Philippe, 68535 Edingen-Neckarhausen (DE); GMÄHLE, Norbert, 67133 Maxdorf (DE); RÖMER, Herbert, 67134 Birkenheide (DE); KREBS, Thilo, 68295 Mannheim (DE); LÖSCH, Dennis, 67122 Altrip (DE)
(74) Vertreter: BASF IP Association
(86) Internationale Anmeldenummer: PCT/EP2010/051146
(87) Internationale Veröffentlichungsnummer: WO 2010/086433

(56) Entgegenhaltungen:
- EP-A1- 0 243 177
- EP-A2- 0 051 210
- EP-A2- 0 173 518
- DE-A1- 3 009 812

## Beschreibung

Die Erfindung betrifft ein Verfahren zur Herstellung von Polymeren aus Monomeren und/oder Oligomeren, wobei eine die Monomere und/oder Oligomere enthaltende Flüssigkeit in eine kontinuierliche Flüssigphase in einem Reaktor eingetropft wird, wobei die kontinuierliche Flüssigphase mit der die Monomere und/oder Oligomere enthaltenden Flüssigkeit nicht mischbar ist, und die Monomere und/oder Oligomere in der kontinuierlichen Flüssigphase zum Polymer reagieren. Die Erfindung betrifft weiterhin einen Reaktor zur Durchführung des Verfahrens und eine Verwendung von Verfahren und Reaktor.

Die Herstellung von Polymeren aus Monomeren und/oder Oligomeren kann auf vielerlei Weise erfolgen. So ist es z.B. zur Herstellung von Polymerperlen möglich, diese durch eine so genannte Tropfenpolymerisation herzustellen. Im Allgemeinen wird zur Tropfenpolymerisation flüssiges Monomer in eine Gasphase gesprüht, wodurch sich einzelne Tropfen ausbilden. In den Tropfen reagiert das Monomer zum Polymer und es bilden sich einzelne Polymerperlen. Nachteil dieser Verfahren ist jedoch, dass die Fallzeit der Tropfen in der Gasphase nur schnelle Reaktionen zulässt. Hierbei handelt es sich z.B. um die Polymerisation von Acrylsäure zu Superabsorbern.

Neben dem Versprühen des flüssigen Monomeren ist es auch möglich, die flüssigen Monomere in einer mit diesen nicht mischbaren Flüssigkeit zu vertropfen. Dies ist z.B. für die Herstellung von Polymethacrylat aus DE-A 30 09 812 oder für die Herstellung von Styrol/Divinylbenzol-Copolymeren aus EP-A 0 173 518 bekannt. Das Vertropfen des flüssigen Monomeren erfolgt dabei jeweils direkt in der Flüssigkeit. Nachteil der Tropfenerzeugung in der kontinuierlichen flüssigen Phase ist jedoch, dass diese auf große Tropfen beschränkt ist und eine Kontrolle auf die Tropfengröße nur reduziert möglich ist. Ein weiterer Nachteil der Tropfenerzeugung in der kontinuierlichen Phase ist, dass bei höheren Temperaturen Verstopfungsgefahr der Düse besteht.

Aufgabe der vorliegenden Erfindung ist es, ein Verfahren zur Herstellung von Polymeren aus Monomeren und/oder Oligomeren bereitzustellen, das die Herstellung von Polymerpartikeln in beliebiger Größe ermöglicht.

Gelöst wird die Aufgabe durch ein Verfahren zur Herstellung von Polymeren aus Monomeren und/oder Oligomeren, wobei eine die Monomere und/oder Oligomere enthaltende Flüssigkeit in eine kontinuierliche Flüssigphase in einem Reaktor eingetropft wird, wobei die kontinuierliche Flüssigphase mit der die Monomere und/oder Oligomere enthaltenden Flüssigkeit nicht mischbar ist, und die Monomere und/oder Oligomere in der kontinuierlichen Flüssigphase zum Polymer reagieren. Die die Monomere und/oder Oligomere enthaltende Flüssigkeit wird außerhalb der kontinuierlichen Flüssigphase zu Tropfen geformt, die anschließend in die kontinuierliche Flüssigphase eingebracht werden.

Das erfindungsgemäße Verfahren erlaubt es, jede beliebige Vorrichtung zur Erzeugung von Tropfen in der Gasphase einzusetzen. Hierdurch ist es möglich, die Tropfengröße beliebig einzustellen. Ein weiterer Vorteil der Erzeugung der Tropfen in der Gasphase ist, dass die zu vertropfende Flüssigkeit an der Vorrichtung zur Erzeugung der Tropfen keinen Kontakt zu einer heißen flüssigen Phase hat und so keine oder nur eine sehr geringe Gefahr der Verstopfung der Düsen besteht. Zudem können die Tropfen optimal in der flüssigen Phase verteilt werden und das verfügbare Reaktionsvolumen kann besser ausgenutzt werden.

Ein weiterer Vorteil der Bildung der Tropfen außerhalb der kontinuierlichen Flüssigphase ist, dass die Bildung der Tropfen bei einer Temperatur unterhalb der Initiierungstemperatur der Reaktion erfolgen kann und die Reaktion erst in der kontinuierlichen Flüssigphase beginnt. Im Unterschied dazu kann es bei einer Bildung der Tropfen in der kontinuierlichen Flüssigphase, wie sie aus dem Stand der Technik bekannt ist, bereits zu einer Reaktion im Tropfenverteiler kommen, wodurch ein Verstopfen der einzelnen Düsen zur Tropfenerzeugung durch Auspolymerisieren des Monomeren möglich ist.

Der Reaktor, in dem die Reaktion durchgeführt wird, ist als Rohrreaktor ausgebildet, wie insbesondere in Ansprüchen 10 bis 13 definiert ist. Das Rohr des Rohrreaktors ist dabei üblicherweise ein Strömungsrohr, das von der kontinuierlichen Flüssigphase durchströmt wird.

Durch Wahl einer geeigneten Flüssigkeit für die kontinuierliche Flüssigphase wird vermieden, dass die einzelnen Tropfen an der Oberfläche der kontinuierlichen Flüssigphase agglomerieren. Hierzu ist es insbesondere vorteilhaft, wenn die kontinuierliche Flüssigphase eine geringe Oberflächenspannung aufweist, so dass die auf die Oberfläche der kontinuierlichen Flüssigphase auftreffenden Tropfen sofort in die kontinuierliche Flüssigphase eintauchen.

In einer ersten Ausführungsform strömen die Tropfen der die Monomere und/oder Oligomere enthaltenden Flüssigkeit und die kontinuierliche Flüssigphase im Gegenstrom. Damit die Tropfen der die Monomere und/oder Oligomere enthaltenden Flüssigkeit und die kontinuierliche Flüssigphase im Gegenstrom strömen, ist es notwendig, dass auf die Tropfen eine treibende Kraft für die Strömung aufgebracht wird. Dies kann z.B. die Schwerkraft sein und die Bewegung der Tropfen durch Absinken in der kontinuierlichen Flüssigphase erfolgen. In diesem Fall muss die Geschwindigkeit der kontinuierlichen Flüssigphase so gewählt werden, dass die in der kontinuierlichen Flüssigphase absinkenden Tropfen nicht mit der kontinuierlichen Flüssigphase mitgerissen werden. Durch eine Gegenströmung der Tropfen aus der die Monomere und/oder Oligomere enthaltenden Flüssigkeit und der kontinuierlichen Flüssigphase lässt sich auf relativ kurzem Bauraum eine vergleichsweise hohe Verweilzeit erzielen.

Bevorzugt ist es jedoch, dass die Tropfen der die Monomere und/oder Oligomere enthaltenden Flüssigkeit und die kontinuierliche Flüssigphase im Gleichstrom strömen. In diesem Fall werden die Tropfen der die Monomere und/oder Oligomere enthaltenden Flüssigkeit durch die kontinuierliche Flüssigphase mitgerissen. Dies hat weiterhin den Vorteil, dass die Form des Strömungsrohres, in dem die Reaktion durchgeführt wird, variabel gestaltet werden kann. So ist es z.B. möglich, das von der kontinuierlichen Flüssigkeit durchströmte Rohr mäanderförmig zu gestalten, um die Bauhöhe zu reduzieren. Auch ist es möglich, das Rohr z.B. spiralförmig auszubilden. Auch jede beliebige andere Geometrie des Strömungsrohres, in dem die kontinuierliche Flüssigphase mit den Tropfen der die Monomere und/oder Oligomere enthaltenden Flüssigkeit strömt, ist denkbar. Aufgrund der variablen Geometrie des Strömungsrohres lassen sich beliebige Verweilzeiten durch unterschiedliche Längen des Rohres realisieren. Weiterhin können unterschiedliche Verweilzeiten auch dadurch realisiert werden, dass die Strömungsgeschwindigkeit der kontinuierlichen Flüssigphase angepasst wird.

Der Zulauf der kontinuierlichen Flüssigphase in den als Strömungsrohr ausgebildeten Reaktor erfolgt vorzugsweise unterhalb der Mittel, mit denen die die Monomere und/oder Oligomere enthaltende Flüssigkeit eingetropft wird. Der Zulauf kann sich dabei oberhalb des Flüssigkeitsspiegels der kontinuierlichen Flüssigphase oder auf Höhe des Flüssigkeitsspiegels der kontinuierlichen Flüssigphase befinden. Auch eine Position unterhalb der Oberfläche der kontinuierlichen Flüssigphase ist denkbar. Bevorzugt ist jedoch eine Anordnung oberhalb der Oberfläche der kontinuierlichen Flüssigphase oder auf Höhe der Oberfläche der kontinuierlichen Flüssigphase.

Bevor die Flüssigkeit wieder aus dem als Reaktor dienenden Strömungsrohr entfernt wird, werden die Polymerpartikel, die sich durch Reaktion der in den Tropfen enthaltenen Monomere und/oder Oligomere gebildet haben, entnommen. Die Abtrennung erfolgt dabei z.B. durch eine beliebige dem Fachmann bekannte Fest/Flüssig-Trennung. Die Fest/Flüssig-Trennung kann z.B. durch geeignete Filter, Siebe, Zentrifugen oder auch z.B. durch einen Hydrozyklon erfolgen. Wenn Filter zur Trennung eingesetzt werden, eignen sich zum Beispiel Bandfilter oder Druckdrehfilter. Weiterhin geeignet ist beispielsweise auch eine kontinuierliche Schubzentrifuge.

Wenn ein Filter zur Abtrennung der Polymerpartikel eingesetzt wird, wird die Filtration insbesondere bei der Herstellung von Polyamiden bei einer Temperatur von mehr als 80°C durchgeführt, da sonst Caprolactam ausfällt und den Filter verstopfen kann.

Um die kontinuierliche Flüssigphase, beispielsweise das Weißöl von den Polymerpartikeln nach der Filtration zu entfernen, werden die Polymerpartikel vorzugsweise gewaschen. Als Waschflüssigkeit eignet sich zum Beispiel Butylacetat.

Nach dem Abtrennen der Feststoffpartikel wird die Flüssigphase wieder über den Zulauf in den Reaktor geleitet. Um zu vermeiden, dass Scherkräfte auf die Tropfen bzw. die aus den Tropfen hergestellten Polymerpartikel einwirken, sind Mittel, mit denen die kontinuierliche Flüssigphase bewegt wird, beispielsweise Pumpen, außerhalb des als Strömungsrohr dienenden Reaktors positioniert. Die Pumpen können z.B. unmittelbar vor dem Zulauf oder unmittelbar nach der Fest/Flüssig-Trennung angeordnet sein. Jedoch ist es auch möglich, die Pumpe an jeder beliebigen anderen Position in der Verbindungsleitung zwischen Entnahmestelle der kontinuierlichen Flüssigphase und Zulauf der kontinuierlichen Flüssigphase in den Reaktor zu positionieren.

Alternativ zu einer strömenden kontinuierlichen Flüssigphase, sei es im Gleichstrom oder im Gegenstrom zu den Tropfen aus der die Monomere und/oder Oligomere enthaltenden Flüssigkeit, ist es auch möglich, dass die kontinuierliche Flüssigphase nicht strömt. In diesem Fall ist es jedoch erforderlich, dass der Reaktor als senkrechtes Rohr oder als Kolonne gestaltet ist, damit die Tropfen in der nicht strömenden Flüssigkeit aufgrund der Schwerkraft nach unten sinken können. In diesem Fall weist der Reaktor einen Zulauf auf, durch den Flüssigkeit ergänzt werden kann, die beispielsweise durch Verdunstung oder durch die Entnahme der hergestellten Polymerpartikel ausgetragen wird.

Da die Reaktion der Monomere und/oder Oligomere zu den Polymeren im Allgemeinen bei erhöhter Temperatur erfolgt, ist es bevorzugt, die kontinuierliche Flüssigphase zu erwärmen. Hierzu ist es z.B. möglich, den Reaktor mit einem Doppelmantel als Wandung zu gestalten und über den Doppelmantel zu beheizen. Hierzu wird der Doppelmantel von einem Heizmedium durchströmt. Alternativ ist auch jede beliebige andere Art der Beheizung denkbar. So ist es z.B. auch möglich, den Doppelmantel durch Einsatz geeigneter Heizelemente elektrisch zu beheizen. Auch ist es denkbar, dass im Rohr Heizelemente aufgenommen sind, die die kontinuierliche Flüssigphase erwärmen. Die Temperatur, auf die die kontinuierliche Flüssigphase erwärmt wird, ist dabei abhängig von der im Reaktor durchgeführten Reaktion.

Im Vergleich zu einer Tropfenpolymerisation in der Gasphase ist die Verweilzeit in der Flüssigkeit größer. Somit lassen sich auch Reaktionen durchführen, die weniger schnell ablaufen. Im Vergleich zu klassischen Polymerisationsmethoden, z.B. Lösungspolymerisation, Fällungspolymerisation, Massepolymerisation, Suspensionspolymerisation, Emulsionspolymerisation, die zum Beispiel im Rührkessel oder einem Rohrreaktor durchgeführt werden, sind diese Reaktionen jedoch immer noch sehr schnell. Durch die große spezifische Oberfläche der Tropfen können hohe Enthalpien beherrscht werden, wodurch eine hohe Reaktionskinetik, eine große Wärmetönung und ein hoher Feststoffgehalt möglich sind. Aufgrund der großen spezifischen Oberfläche der Tropfen wird ein Überhitzen oder Durchgehen der Reaktion verhindert.

Ein weiterer Vorteil des erfindungsgemäßen Verfahrens ist es, dass es nicht notwendig ist, zusätzliche Mittel einzusetzen, durch die eine Tropfenkoaleszenz vermieden wird. Solche Mittel sind z.B. Tenside, mit denen die Oberflächenspannung herabgesetzt wird.

Die Erzeugung der Tropfen aus der die Monomere und/oder Oligomere enthaltenden Flüssigkeit kann auf jede beliebige, dem Fachmann bekannte Art erfolgen. Eingesetzt werden üblicherweise Verfahren zur Tropfenerzeugung, durch die Tropfen in der Gasphase erzeugt werden. Geeignete Verfahren sind z.B. Düsen oder auch Bohrungen in einer Vertropferplatte wie im Anspruch 4 beansprucht werden. Wenn Düsen eingesetzt werden, eignet sich jede beliebige Düsenform, durch die Tropfen erzeugt werden.

Zur Erzeugung der Tropfen können z.B. eine oder mehrere Sprühdüsen eingesetzt werden. Dabei ist es möglich, jede beliebige, dem Fachmann bekannte Sprühdüse zu verwenden. Derartigen Sprühdüsen kann die zu versprühende Flüssigkeit unter Druck zugeführt werden. Die Zerteilung der zu versprühenden Flüssigkeit in einzelne Tropfen erfolgt dabei z.B. dadurch, dass nach Erreichen einer vorgegebenen Mindestgeschwindigkeit die Flüssigkeit in der Düsenbohrung entspannt wird. Auch ist es möglich, Einstoffdüsen einzusetzen, beispielsweise Schlitzdüsen oder Vollkegeldüsen.

Besonders bevorzugt ist die Verwendung von Vollkegeldüsen. Darunter sind solche mit einem Öffnungswinkel des Sprühkegels von 60° bis 180° besonders bevorzugt. Insbesondere bevorzugt sind Vollkegeldüsen mit einem Öffnungswinkel im Bereich von 90° bis 120°. Der sich beim Versprühen einstellende Tropfendurchmesser liegt vorzugsweise im Bereich von 10 bis 1000 µm, bevorzugt im Bereich von 50 bis 500 µm, insbesondere im Bereich von 100 bis 200 µm. Der Tropfendurchmesser kann nach dem Fachmann bekannten Methoden, beispielsweise Lichtstreuung, oder anhand von bei Düsenherstellern erhältlichen Kennlinien bestimmt werden. Der Durchsatz jeder einzelnen eingesetzten Sprühdüse liegt vorzugsweise im Bereich von 0,1 bis 10 m³/h, insbesondere im Bereich von 0,5 bis 5 m³/h.

Alternativ zur Verwendung von Sprühdüsen ist es auch möglich, Vorrichtungen einzusetzen, in denen die die Monomere und/oder Oligomere enthaltende Flüssigkeit in Form monodisperser Tropfen frei fallen kann. Eine solche Vorrichtung ist z.B. in US 5,269,980 beschrieben. Weiterhin ist auch eine Tropfenerzeugung durch laminaren Strahlzerfall, beispielsweise wie in Rev. Sci. Instr. 38(1966) 502, beschrieben, möglich.

Der Einsatz einer Vertropferplatte mit Bohrungen eignet sich insbesondere für viskose Flüssigkeiten. Die Größe der Bohrungen wird dann so gewählt, dass nicht ein Flüssigkeitsstrahl durch die Bohrungen austritt, sondern einzelne Tropfen. Hierzu befindet sich oberhalb der Vertropferplatte ein Flüssigkeitsvorrat, der die die Monomere und/oder Oligomere enthaltende Flüssigkeit enthält. Aus dem Flüssigkeitsvorrat läuft Flüssigkeit durch die Bohrungen in der Vertropferplatte und tropft von diesen ab in die kontinuierliche Flüssigphase.

Ebenfalls geeignet ist die Erzeugung der Tropfen durch pneumatische Ziehdüsen, Rotation, Zerschneiden eines Strahls oder schnell ansteuerbare Mikroventildüsen.

Bei der Erzeugung von Tropfen in einer pneumatischen Ziehdüse wird ein Flüssigkeitsstrahl zusammen mit einem Gasstrom durch eine Blende beschleunigt. Über die eingesetzte Gasmenge kann der Durchmesser des Flüssigkeitsstrahls und damit auch der Tropfendurchmesser beeinflusst werden.

Bei der Tropfenerzeugung durch Rotation tritt die Flüssigkeit durch die Öffnungen einer rotierenden Scheibe. Durch die auf die Flüssigkeit wirkende Fliehkraft werden Tropfen definierter Größe abgerissen. Wenn die Tropfen durch Zerschneiden eines Strahls erzeugt werden, so kann z.B. eine aus einer Öffnung oder Düse austretende Flüssigkeit mit einem rotierenden Messer in definierte Segmente zerschnitten werden. Dabei bildet jedes Segment anschließend einen Tropfen.

Bei Verwendung von Mikroventildüsen werden direkt Tropfen mit definiertem Flüssigkeitsvolumen erzeugt.

Wenn die die Monomere und/oder Oligomere enthaltende Flüssigkeit durch mindestens eine Bohrung in einer Vertropferplatte unter Ausbildung von Tropfen dosiert wird, ist es vorteilhaft, die Vertropferplatte oder die Flüssigkeit in Schwingungen zu versetzen, wodurch an der Unterseite der Vertropferplatte je Bohrung eine idealerweise monodisperse Tropfenkette erzeugt wird. Bevorzugt ist es jedoch, die Vertropferplatte nicht anzuregen.

Die Anzahl und die Größe der Bohrungen in der Vertropferplatte werden gemäß der gewünschten Kapazität und Tropfengröße ausgewählt. Der Tropfendurchmesser beträgt dabei üblicherweise das 1,9-Fache des Durchmessers der Bohrung. Hierbei ist zu beachten, dass die zu vertropfende Flüssigkeit nicht zu schnell durch die Bohrung tritt bzw. dass der Druckverlust über die Bohrung nicht zu groß ist. Ansonsten wird die Flüssigkeit nicht vertropft, sondern der Flüssigkeitsstrahl wird in Folge der hohen kinetischen Energie zerrissen, d.h. versprüht. Die Reynoldszahl bezogen auf den Durchsatz pro Bohrung und den Bohrungsdurchmesser ist vorzugsweise <2000, mehr bevorzugt <1600, besonders bevorzugt <1400 und ganz besonders bevorzugt <1200.

Für das erfindungsgemäße Verfahren eingesetzte Vertropferplatten weisen mindestens eine, vorzugsweise mindestens 10 und insbesondere mindestens 50 bis hin zu 10.000, vorzugsweise bis zu 5000 und insbesondere bis zu 1000 Bohrungen auf, wobei die Bohrungen vorteilhafter Weise gleichmäßig über die Vertropferplatte verteilt sind. Die Verteilung erfolgt dabei vorzugsweise in der so genannten Dreiecksteilung, bei der jeweils drei Bohrungen die Ecken eines gleichseitigen Dreiecks bilden.

Der Abstand der Bohrungen liegt vorzugsweise im Bereich von 1 bis 50 mm, besonders bevorzugt im Bereich von 2,5 bis 20 mm und insbesondere im Bereich von 5 bis 10 mm.

Unabhängig von der Art der eingesetzten Mittel zur Erzeugung von Tropfen liegt der Abstand zwischen den Mitteln zur Erzeugung von Tropfen und der kontinuierlichen Flüssigphase vorzugsweise im Bereich von 20 bis 500 mm, mehr bevorzugt im Bereich von 30 bis 200 mm und insbesondere im Bereich von 50 bis 150 mm.

In Abhängigkeit des eingesetzten Mittels zur Erzeugung von Tropfen sowie der Viskosität der die Monomere und/oder Oligomere enthaltenden Flüssigkeit lässt sich die Tropfengröße beeinflussen. Die Viskosität der die Monomere und/oder Oligomere enthaltenden Flüssigkeit lässt sich dabei beispielsweise durch Einsatz von Lösungsmitteln, in denen die Monomere und/oder Oligomere dispergiert werden, einstellen. Bevorzugt ist es jedoch, eine Flüssigkeit einzusetzen, die nur Monomere und/oder Oligomere und kein Lösungsmittel enthält. Dies hat den Vorteil, dass nach Abschluss der Reaktion kein zusätzliches Lösungsmittel aus der kontinuierlichen Flüssigphase bzw. von dem erzeugten Polymer abgetrennt werden muss. Wenn die Monomere und/oder Oligomere ohne zusätzliches Lösungsmittel eingesetzt werden, hat dies den Vorteil, dass nach Abschluss der Polymerisationsreaktion lediglich die kontinuierliche Flüssigphase und die Polymerpartikel voneinander durch eine beliebige Fest/Flüssig-Trennung getrennt werden müssen und die Partikel anschließend getrocknet werden müssen. Das Trocknen kann z.B. durch Begasen mit Stickstoff erfolgen. Jedoch ist auch jede beliebige andere Trocknungsart, die dem Fachmann bekannt ist, möglich. Hierbei ist lediglich darauf zu achten, dass die Atmosphäre, in der die Polymerpartikel getrocknet werden, inert ist.

Reaktionen, die zur Herstellung von Polymeren mit dem erfindungsgemäßen Verfahren durchgeführt werden, können alle Reaktionen sein, durch die Polymere hergestellt werden können. So lässt sich das Verfahren z.B. anwenden für ionische oder radikalische Polymerisationen, Polyadditionen oder Polykondensationen. Insbesondere bei Einsatz des Verfahrens für Polykondensationen ist es besonders vorteilhaft, wenn die kontinuierliche Flüssigphase die gleiche Flüssigkeit enthält, die auch bei der Polykondensation abgespaltet wird.

Je nach herzustellendem Polymer kann die Monomere und/oder Oligomere enthaltende Flüssigkeit nur eine Art Monomere und/oder Oligomere enthalten oder unterschiedliche Monomere und/oder Oligomere. Wenn unterschiedliche Monomere und/oder Oligomere enthalten sind, so können diese entweder unterschiedliche funktionelle Gruppen aufweisen, die miteinander reagieren und so eine Kette bilden oder es werden Monomere und Comonomere zur Herstellung von Copolymeren eingesetzt. Besonders bevorzugt wird das Verfahren zur Herstellung von Polyamiden eingesetzt. Bei der Herstellung von Polyamiden reagieren üblicherweise zwei unterschiedliche Monomereinheiten zum Polymer. Im Folgenden werden die unterschiedlichen Monomereinheiten als Monomer und Comonomer bezeichnet. Die Monomere enthaltende Flüssigkeit enthält insbesondere Monomere und Comonomere, die miteinander zum Polymer reagieren.

Das Verfahren ist weiterhin in Ansprüchen 7 bis 9 definiert.

Bei der Herstellung von Polyamiden sind die Monomere z.B. ausgewählt aus der Gruppe bestehend aus Caprolactam, Caprolacton und Laurinlactam und die Comonomere sind ausgewählt aus der Gruppe bestehend aus Caprolactam, Caprolacton, Laurinlactam, Polytetrahydrofuran und Aminocaprolactam.

Neben der Herstellung von Polyamiden ist jedoch auch die Herstellung beliebiger anderer Polymere möglich. So lässt sich das erfindungsgemäße Verfahren oder ein Rohrrreaktor insbesondere auch zur Herstellung von Poly(meth)acrylaten, wie sie beispielsweise als Superabsorber eingesetzt werden, verwenden.

Weiterhin kann das erfindungsgemäße Verfahren oder ein Rohrreaktor auch zur Herstellung von Polystyrol, Polyvinylpyrrolidon, Polyacrylamid, Polyvinylalkohol, Polyacrylsäure, Polyvinylaminen, Polymaleinsäure, Polybutylacrylat, Polycaprolactonen und thermoplastischen Polyurethanen eingesetzt werden.

In einer Ausführungsform der Erfindung ist es auch möglich, verkapselte Partikel herzustellen. Als Verkapselungsmaterialien für die Hülle der verkapselten Polymerpartikel eignen sich grundsätzlich alle Materialien, die von der inneren flüssigen Phase nicht angelöst oder aufgelöst werden. Als Materialien für die Hülle können z.B. auch Homo- oder Copolymere der zu polymerisierenden Monomere eingesetzt werden, sofern diese sich gegenüber der inneren flüssigen Phase als nicht löslich verhalten. Die innere flüssige Phase ist dabei die Monomere und/oder Oligomere enthaltende Flüssigkeit. So ist es z.B. möglich, bei der Herstellung von Polystyrol ein bereits polymerisiertes Polystyrol als Hüllmaterial einzusetzen. Dabei kann das Polystyrol in Form einer Schmelze eingesetzt werden.

Weiterhin kann bei der Herstellung von Polymeren auf Basis von N-Vinylpyrrolidon ein Polyvinylpyrrolidon als Hüllmaterial verwendet werden, wobei das Polyvinylpyrrolidon in Form einer Lösung eingesetzt werden kann.
Auch eignen sich thermoplastische Polymere wie Polyethersulfone, Polysulfone oder Polycaprolactone. Weiterhin eignen sich als Hüllmaterialien Wachse wie Paraffinwachs, die in Form einer Schmelze vertropft werden können.
Die Polymere können als wässrige Lösung oder in Form einer Schmelze eingesetzt werden. Dabei können die Hüllmaterialien Schmelzpunkte im Bereich von 20 bis 220°C aufweisen, bevorzugt im Bereich von 60 bis 200°C.

Um verkapselte Polymerpartikel zu erhalten, werden vorzugsweise in die kontinuierliche Flüssigphase Doppeltropfen eingetropft, wobei die Doppeltropfen einen Kern aus der die Monomere und/oder Oligomere enthaltenden Flüssigkeit und eine äußere Hülle aus einem Verkapselungsmaterial oder einem Vorläufer des Verkapselungsmaterials aufweisen. Die Doppeltropfen sollen dabei bevorzugt als mononukleare Tropfen erzeugt werden. Bei einem solchen Doppeltropfen liegt der Kern zentriert im Inneren der Mikrokapsel und wird vom Mantel umhüllt. Geeignete Vorrichtungen, mit denen solche Doppeltropfen erzeugt werden können, sind z.B. Mehrstoffdüsen, bevorzugt solche mit laminarem Strahlzerfall. Insbesondere eignen sich Ringspaltdüsen. Derartige Ringspaltdüsen umfassen im Allgemeinen eine zentriert liegende Innendüse, durch die die Monomere und/oder Oligomere enthaltende Flüssigkeit als Kernmaterial geleitet wird und einen konzentrisch dazu angeordneten Ringdüsenspalt für das Verkapselungsmaterial oder den Vorläufer des Verkapselungsmaterials. Die Mehrstoffdüsen können auch so betrieben werden, dass die Vertropfung durch laminaren Strahlzerfall erfolgt.

Die Vertropfung kann beispielsweise durch das Anlegen einer Schwingung, beispielsweise einer sinusförmigen Schwingung, unterstützt werden. Bei diesen so genannten Vibrationsverfahren wird die gesamte Mehrstoffdüse durch einen Schwingerreger angeregt. Die Frequenzen können dabei im Bereich von 50 bis 20 000 Hz liegen. Auf diese Weise gebildete Doppeltropfen können nach dem Verlassen des Reaktors entweder in einem Aushärtebecken verfestigt werden oder eine Kühlstrecke durchlaufen, um das Mantelmaterial zu verfestigen.

Aufgrund der Hülle ist es nicht notwendig, dass die Monomere und/oder Oligomere, die im Inneren der Hülle enthalten sind, bereits vollständig im Reaktor zum Polymeren umgesetzt werden. Die weitere Polymerisation kann auch im Anschluss an die Verfestigung der Hülle erfolgen oder zu einem beliebigen anderen späteren Zeitpunkt.

### Beispiele

### Beispiel 1

Eine 17-19%-ige Na-Caprolactamat in Caprolactam enthaltende Lösung (Brüggolen C20 der Fa. Brüggemann) wird mit einer Lösung, die blockiertes Diisocyanat in Caprolactam enthält, gemischt. Die das blockierte Diisocyanat enthaltende Lösung enthält ungefähr 17% NCO-Gruppen (Brüggolen C10 der Fa. Brüggemann). Die beiden Lösungen werden in einem Verhältnis von 7 zu 1 miteinander vermischt.

Durch eine Kapillare wird die Mischung in 130°C heißes Weißöl vertropft. Der Abstand zwischen der Kapillare und dem Weißöl beträgt 50 mm.

Das Weißöl ist in einer 1500 mm hohen Glaskolonne enthalten, in der das Weißöl im Kreis von oben nach unten gepumpt und durch einen Filter zur Feststoffabscheidung geführt wird.

Die Verweilzeit der einzelnen Tropfen in der Glaskolonne beträgt 20 Sekunden. Eine Analyse der entnommenen Polymerpartikel ergibt einen Rest-Caprolactamgehalt von 2%, eine Viskositätszahl (VZ), gemessen nach DIN 1628-1 mit einem Ubbelohde-Viskosimeter Typ DIN-II mit einer Kapillarkonstante von 0,0996, bei einer Temperatur von 25°C und 96%iger Schwefelsäure als Lösungsmittel, von 120 ml/g und eine mittlere Partikelgröße von 750 µm.

### Beispiel 2

Es wird eine Reaktion wie in Beispiel 1 beschrieben durchgeführt, jedoch beträgt die Verweilzeit der Tropfen in der Glaskolonne 50 Sekunden. In diesem Fall beträgt der Restgehalt an Caprolactam 1%, die Viskositätszahl liegt bei 170 ml/g und der mittlere Partikeldurchmesser beträgt ebenfalls 750 µm.

### Beispiel 3

Im Unterschied zu Beispiel 2 wird eine längere Verweilzeit im Filter realisiert. In diesem Fall ergibt sich ein Rest-Caprolactamgehalt von 0,4%, die Viskositätszahl liegt bei 170 ml/g und der mittlere Partikeldurchmesser bei 750 µm.

## Patentansprüche

1. Verfahren zur Herstellung von Polymeren aus Monomeren und/oder Oligomeren, wobei eine die Monomere und/oder Oligomere enthaltende Flüssigkeit in eine kontinuierliche Flüssigphase in einem Reaktor eingetropft wird, wobei die kontinuierliche Flüssigphase mit der die Monomere und/oder Oligomere enthaltenden Flüssigkeit nicht mischbar ist, und die Monomere und/oder Oligomere in der kontinuierlichen Flüssigphase zum Polymer reagieren, wobei die die Monomere und/oder Oligomere enthaltende Flüssigkeit außerhalb der kontinuierlichen Flüssigphase zu Tropfen geformt wird, die anschließend in die kontinuierliche Flüssigphase eingebracht werden, **dadurch gekennzeichnet, dass** der Reaktor als Rohrreaktor ausgebildet ist.

2. Verfahren gemäß Anspruch 1, **dadurch gekennzeichnet, dass** die Tropfen der die Monomere und/oder Oligomere enthaltenden Flüssigkeit und die kontinuierliche Flüssigphase im Gegenstrom strömen.

3. Verfahren gemäß Anspruch 1, **dadurch gekennzeichnet, dass** die Tropfen der die Monomere und/der Oligomere enthaltenden Flüssigkeit und die kontinuierliche Flüssigphase im Gleichstrom strömen.

4. Verfahren gemäß einem der Ansprüche 1 bis 3, **dadurch gekennzeichnet, dass** die die Monomere und/oder Oligomere enthaltende Flüssigkeit durch mindestens eine Düse oder durch Bohrungen in einer Vertropferplatte zu Tropfen geformt wird.

5. Verfahren gemäß einem der Ansprüche 1 bis 4, **dadurch gekennzeichnet, dass** die Monomere enthaltende Flüssigkeit Monomere und Comonomere enthält, die miteinander zum Polymer reagieren.

6. Verfahren gemäß Anspruch 5, **dadurch gekennzeichnet, dass** die Monomere ausgewählt sind aus der Gruppe bestehend aus Caprolactam, Caprolacton und Laurinlactam und die Comonomere ausgewählt sind aus der Gruppe bestehend aus Caprolactam, Caprolacton, Laurinlactam, Polytetrahydrofuran und Aminocaprolactam.

7. Verfahren gemäß einem der Ansprüche 1 bis 6, **dadurch gekennzeichnet, dass** in die kontinuierliche Flüssigphase Doppeltropfen eingetropft werden, wobei die Doppeltropfen einen Kern aus der die Monomere und/oder Oligomere enthaltenden Flüssigkeit und eine äußere Hülle aus einem Verkapselungsmaterial oder einem Vorläufer des Verkapselungsmaterials aufweisen.

8. Verfahren gemäß Anspruch 7, **dadurch gekennzeichnet, dass** das Verkapselungsmaterial Homo- oder Copolymere der eingesetzten Monomere enthält, wobei die Homo- oder Copolymere nicht in der im Kern enthaltenen, die Monomere enthaltenden Flüssigkeit löslich sind.

9. Verfahren gemäß Anspruch 7 oder 8, **dadurch gekennzeichnet, dass** die Doppeltropfen durch eine Ringspaltdüse erzeugt werden.

10. Rohrreaktor zur Durchführung des Verfahrens gemäß einem der Ansprüche 1 bis 9, umfassend ein Rohr, das von einer kontinuierlichen Flüssigphase durchströmt wird, sowie Mittel zur Erzeugung von Tropfen aus einer Monomere und/oder Oligomere enthaltenden Flüssigkeit, die mit der kontinuierlichen Flüssigphase nicht mischbar ist, wobei die Mittel zur Erzeugung von Tropfen so angeordnet sind, dass die Tropfen außerhalb der kontinuierlichen Flüssigphase erzeugt werden und anschließend in die kontinuierliche Flüssigphase eingebracht werden.

11. Rohrreaktor gemäß Anspruch 10, **dadurch gekennzeichnet, dass** als Mittel zur Erzeugung von Tropfen Düsen oder eine Bohrungen enthaltende Vertropferplatte verwendet wird.

12. Rohrreaktor gemäß Anspruch 10 oder 11, **dadurch gekennzeichnet, dass** der Abstand zwischen den Mitteln zur Erzeugung von Tropfen und der kontinuierlichen Flüssigphase im Bereich von 20 bis 500 mm liegt.

13. Rohrreaktor gemäß einem der Ansprüche 10 bis 12, **dadurch gekennzeichnet, dass** die Mittel zur Erzeugung von Tropfen oberhalb der kontinuierlichen Flüssigphase angeordnet sind, so dass die Tropfen von den Mitteln zur Erzeugung der Tropfen in die kontinuierliche Flüssigphase fallen.

14. Verwendung des Verfahrens gemäß einem der Ansprüche 1 bis 9 oder eines Reaktors gemäß einem der Ansprüche 10 bis 13 zur Herstellung von Polyamiden, Polystyrol, Poly(meth)acrylaten, Polyacrylamid, Polyvinylalkohol, Polyvinylpyrrolidon, Polyacrylsäure, Polyvinylaminen, Polymaleinsäure, Polybutylacrylat, Polycaprolactonen, und thermoplastischen Polyurethanen.

## Claims

1. A process for preparing polymers from monomers and/or oligomers by adding a liquid comprising the monomers and/or oligomers dropwise to a continuous liquid phase in a reactor, the continuous liquid phase being immiscible with the liquid comprising the monomers and/or oligomers, and the monomers and/or oligomers reacting in the continuous liquid phase to give the polymer, which comprises shaping the liquid comprising the monomers and/or oligomers to droplets outside the continuous liquid phase and then introducing them into the continuous liquid phase, wherein the reactor is configured as a tubular reactor.

2. The process according to claim 1, wherein the droplets of the liquid comprising the monomers and/or oligomers and the continuous liquid phase flow in countercurrent.

3. The process according to claim 1, wherein the droplets of the liquid comprising the monomers and/or oligomers and the continuous liquid phase flow in cocurrent.

4. The process according to any one of claims 1 to 3, wherein the liquid comprising the monomers and/or oligomers is shaped to droplets by means of at least one nozzle or by means of bores in a

5. The process according to any one of claims 1 to 4, wherein the liquid comprising monomers comprises monomers and comonomers which react with one another to give the polymer.

6. The process according to claim 5, wherein the monomers are selected from the group consisting of caprolactam, caprolactone and laurolactam, and the comonomers are selected from the group consisting of caprolactam, caprolactone, laurolactam, polytetrahydrofuran and aminocaprolactam.

7. The process according to any one of claims 1 to 6, wherein double droplets are added dropwise to the continuous liquid phase, the double droplets having a core composed of liquid comprising the monomers and/or oligomers and an outer shell composed of an encapsulation material or a precursor of the encapsulation material.

8. The process according to claim 7, wherein the encapsulation material comprises homo- or copolymers of the monomers used, the homo- or copolymers being insoluble in the liquid comprising the monomers which is present in the core.

9. The process according to claim 7 or 8, wherein the double droplets are obtained by means of an annular gap nozzle.

10. A tubular reactor for performing the process according to any one of claims 1 to 9, comprising a tube through which a continuous liquid phase flows, and means of generating droplets from a liquid comprising monomers and/or oligomers, which liquid is immiscible with the continuous liquid phase, the means of generating droplets being arranged such that the droplets are generated outside the continuous liquid phase and then introduced into the continuous liquid phase.

11. The tubular reactor according to claim 10, wherein the means of generating droplets used are nozzles or a dropletizer plate comprising bores.

12. The tubular reactor according to claim 10 or 11, wherein the distance between the means of generating droplets and the continuous liquid phase is in the range from 20 to 500 mm.

13. The tubular reactor according to any one of claims 10 to 12, wherein the means of generating droplets are arranged above the continuous liquid phase, such that the droplets fall from the means of generating the droplets into the continuous liquid phase.

14. The use of the process according to any one of claims 1 to 9 or of a reactor according to any one of claims 10 to 13 for preparing polyamides, polystyrene, poly(meth)acrylates, polyacrylamide, polyvinyl alcohol, polyvinylpyrrolidone, polyacrylic acid, polyvinylamines, polymaleic acid, polybutyl acrylate, polycaprolactones and thermoplastic polyurethanes.

## Revendications

1. Procédé de fabrication de polymères à partir de monomères et/ou d'oligomères, selon lequel un liquide contenant les monomères et/ou les oligomères est introduit goutte à goutte dans une phase liquide continue dans un réacteur, la phase liquide continue n'étant pas miscible avec le liquide contenant les monomères et/ou les oligomères, et les monomères et/ou les oligomères réagissant pour former le polymère dans la phase liquide continue, le liquide contenant les monomères et/ou les oligomères étant mis sous la forme de gouttes en dehors de la phase liquide continue, qui sont ensuite introduites dans la phase liquide continue, **caractérisé en ce que** le réacteur est configuré sous la forme d'un réacteur tubulaire.

2. Procédé selon la revendication 1, **caractérisé en ce que** les gouttes du liquide contenant les monomères et/ou les oligomères et la phase liquide continue s'écoulent à contre-courant.

3. Procédé selon la revendication 1, **caractérisé en ce que** les gouttes du liquide contenant les monomères et/ou les oligomères et la phase liquide continue s'écoulent à co-courant.

4. Procédé selon l'une quelconque des revendications 1 à 3, **caractérisé en ce que** le liquide contenant les monomères et/ou les oligomères est mis sous la forme de gouttes par au moins une buse ou par des alésages dans une plaque de formation de gouttes.

5. Procédé selon l'une quelconque des revendications 1 à 4, **caractérisé en ce que** le liquide contenant des monomères contient des monomères et des comonomères, qui réagissent les uns avec les autres pour former le polymère.

6. Procédé selon la revendication 5, **caractérisé en ce que** les monomères sont choisis dans le groupe constitué par le caprolactame, la caprolactone et le laurine-lactame, et les comonomères sont choisis dans le groupe constitué par le caprolactame, la caprolactone, le laurine-lactame, le polytétrahydrofurane et l'aminocaprolactame.

7. Procédé selon l'une quelconque des revendications 1 à 6, **caractérisé en ce que** des gouttes doubles sont introduites goutte à goutte dans la phase liquide continue, les gouttes doubles comprenant un noyau en le liquide contenant les monomères et/ou les oligomères et une enveloppe extérieure en un matériau d'encapsulation ou un précurseur du matériau d'encapsulation.

8. Procédé selon la revendication 7, **caractérisé en ce que** le matériau d'encapsulation contient des homo- ou copolymères des monomères utilisés, les homo- ou copolymères n'étant pas solubles dans le liquide contenant les monomères contenu dans le noyau.

9. Procédé selon la revendication 7 ou 8, **caractérisé en ce que** les gouttes doubles sont formées par une buse à fente annulaire.

10. Réacteur tubulaire pour la réalisation du procédé selon l'une quelconque des revendications 1 à 9, comprenant un tube, qui est traversé par une phase liquide continue, ainsi que des moyens pour la génération de gouttes à partir d'un liquide contenant des monomères et/ou des oligomères, qui n'est pas miscible avec la phase liquide continue, les moyens pour la génération de gouttes étant agencés de sorte que les gouttes soient formées en dehors de la phase liquide continue, puis introduites dans la phase liquide continue.

11. Réacteur tubulaire selon la revendication 10, **caractérisé en ce que** des buses ou une plaque de formation de gouttes contenant des alésages sont utilisées en tant que moyens pour la génération de gouttes.

12. Réacteur tubulaire selon la revendication 10 ou 11, **caractérisé en ce que** la distance entre les moyens pour la génération de gouttes et la phase liquide continue se situe dans la plage allant de 20 à 500 mm.

13. Réacteur tubulaire selon l'une quelconque des revendications 10 à 12, **caractérisé en ce que** les moyens pour la génération de gouttes sont agencés au-dessus de la phase liquide continue de sorte que les gouttes chutent depuis les moyens pour la génération de gouttes dans la phase liquide continue.

14. Utilisation du procédé selon l'une quelconque des revendications 1 à 9 ou d'un réacteur selon l'une quelconque des revendications 10 à 13 pour la fabrication de polyamides, de polystyrène, de poly(méth)acrylates, de polyacrylamide, d'alcool polyvinylique, de polyvinylpyrrolidone, d'acide polyacrylique, de polyvinylamines, d'acide polymaléique, de polyacrylate de butyle, de polycaprolactones et de polyuréthanes thermoplastiques.
